# EUROPÄISCHE PATENTANMELDUNG

(11) **EP 4 621 641 A1**
(43) Veröffentlichungstag der Anmeldung: **24.09.2025**
(21) Anmeldenummer: 25164456.3
(22) Anmeldetag: 18.03.2025
(51) Int. Cl.: G06K 19/077

(54) **HERSTELLEN EINES TRÄGERKÖRPERS FÜR EINEN PORTABLEN DATENTRÄGER**

(30) Priorität: 19.03.2024 DE 102024107861
(71) Anmelder: Giesecke+Devrient ePayments GmbH, 81677 München (DE)
(72) Erfinder: Riedl, Josef, 81677 München (DE); Tarantino, Peter, 81677 München (DE); Tarantino, Thomas, 81677 München (DE)
(74) Vertreter: LKGLOBAL Lorenz & Kopf Patentanwalt Attorney at Law PartG mbB

(57) **Zusammenfassung**

Die Erfindung betrifft ein Verfahren zum Herstellen eines Trägerkörpers (2), insbesondere für einen portablen Datenträger (1), mit einem Hohlraum (3), einen entsprechenden Trägerkörper (2), einen portablen Datenträger (1) und eine Herstellungsvorrichtung (20) zum Herstellen portabler Datenträger (1), wobei das Verfahren folgende Schritte umfasst: Bereitstellen einer Kernschicht (10) mit wenigstens einer Aussparung (13), die eine Kontur des Hohlraumes (13) vorgibt, Abdecken der Kernschicht (10) mit einer Versteifungsschicht (11), Überdecken der Versteifungsschicht (11) mit einer Deckschicht (12) und Verbinden der Kernschicht (10), der Versteifungsschicht (11) und der Deckschicht (13) miteinander.

## Beschreibung

### Gebiet der Erfindung

Die vorliegende Erfindung betrifft Verfahren und Herstellungsvorrichtungen zur Bereitstellung von portablen Datenträgern mit Hohlräumen. Insbesondere betrifft die Erfindung ein Verfahren zum Herstellen eines Trägerkörpers, insbesondere für einen portablen Datenträger, mit einem Hohlraum, einen Trägerkörper, insbesondere für einen portablen Datenträger, mit einem Hohlraum, einen portablen Datenträger und eine Herstellungsvorrichtung für portable Datenträger.

### Hintergrund der Erfindung

Portable Datenträger sind aus dem Stand der Technik bekannt und können beispielweise zum bargeldlosen Bezahlen von Waren oder Dienstleistungen, zur personenbezogenen Identitätsfeststellung und/oder für einen Zugang zu internetbasierten Anwendungsprogrammen eingesetzt werden. Dementsprechend gibt es z.B. kartenförmige Datenträger in Form von Chipkarten im Allgemeinen, Zahlungskarten, wie beispielsweise Kreditkarten oder Debitkarten, sowie Personalausweis- oder Identitätskarten. Derartige Datenträger umfassen üblicherweise eine elektronische Schaltung mit einem elektronischen Bauteil, wie einem Chip, auf den Zugriffen werden kann, um Daten daraus auszulesen und darauf basierend einen legitimen Besitzer des Datenträgers eine bestimmte Handlung vorzunehmen und/oder autorisieren zu lassen.

WO 2023/274575 A1 befasst sich mit einem Verfahren zum Herstellen eines Chipkartenkörpers mit einer metallischen Kernschicht für eine kontaktlose oder Dual-Interface Chipkarte wird ein Schlitz in der metallischen Kernschicht zur Reduzierung von Wirbelströmen nicht bereits im metallischen Mehrnutzenbogen, sondern erst in der aus dem metallischen Mehrnutzenbogen herausgetrennten metallischen Kernschicht erzeugt. So verbleiben keine kurzschlussbildenden Metallspäne im Schlitz, da der Schlitz erst nach dem Heraustrennen der metallischen Kernschicht aus dem Mehrnutzenbogen erzeugt wird.

WO 2013/149694 A1 betrifft ein Verfahren zum Herstellen eines mehrschichtigen Kartenkörpers für einen tragbaren Datenträger mit den Schritten: Bereitstellen zweier Schichten aus synthetischem Papier, Bereitstellen wenigstens einer Deckschicht aus Kunststoff, Bedrucken der Oberseite der Schichten aus synthetischem Papier mit einem graphischen Muster in einem Siebdruck- oder einem Offset-Druckverfahren, Zusammenführen der Schichten zu einem Halbzeug, Zusammenlaminieren der Schichten bei chipkartentypischen Bedingungen, Heraustrennen des Kartenkörpers aus dem Halbzeug mittels eines Trennwerkzeuges.

DE 199 42 932 A1 beschreibt ein Verfahren zum Herstellen von Chipkarten. Hierbei wird zunächst ein Bogen mit mindestens der doppelten Fläche einer Chipkarte hergestellt. In diesen Bogen wird mindestens eine Falzlinie eingebracht, so dass auf jeder Seite symmetrisch zur Falzlinie mindestens die Fläche einer Chipkarte verbleibt. Weiterhin wird mindestens ein Bauelement und/oder eine Aussparung für ein Bauelement in bzw. auf den Bogen eingebracht bzw. aufgebracht und der Bogen auf einer Seite vollflächig oder bereichsweise mit einem aktivierbaren Kleber versehen. Anschließend wird der Bogen entlang der Falzlinie mit der Kleberfläche nach innen zusammengefaltet, gepresst und gleichzeitig der Kleber mit einem Verfahren aktiviert, welches das Material des Bogens 1 im Wesentlichen unverändert lässt, nämlich beispielsweise mittels Mikrowellen oder elektrisch durch Widerstandsschweißen oder im Magnetfeld oder durch den Pressdruck. Bei den aus dem Stand der Technik bekannten Verfahren zur Herstellung von Datenträgern, kann von Nachteil sein, dass darin erzeugte Hohlräume u.U. nicht mit genügender Präzision bereitgestellt werden. So können zum einen Hilfsmittel, wie Kleber oder ähnliches beim Herstellen oder Versiegeln der Hohlräume in diese hineinlaufen. Zum anderen kann insbesondere bei der Anwendung thermischer Fügeverfahren eine gewünschte Maßhaltigkeit der Hohlräume eventuell nicht eingehalten werden, weil sie sich beim Herstellen verformen oder durch thermische Einwirkung verflüssigtes Material in die Hohlräume drückt.

### Beschreibung

Es ist daher eine Aufgabe der vorliegenden Erfindung, Verfahren zur Bereitstellung von Hohlräumen in Datenträgern zu verbessern. Insbesondere ist eine Aufgabe der vorliegenden Erfindung, eine präzise Herstellung der Hohlräume zu vereinfachen.

Diese Aufgabe wird durch den Gegenstand der unabhängigen Ansprüche gelöst. Beispielhafte Ausführungsformen ergeben sich aus den abhängigen Ansprüchen und der nachfolgenden Beschreibung.

Verfahren zum Herstellen eines Trägerkörpers, insbesondere für einen portablen Datenträger, mit einem Hohlraum, wird bereitgestellt, umfassend folgende Schritte:
- Bereitstellen einer Kernschicht mit wenigstens einer Aussparung, die eine Kontur des Hohlraumes vorgibt,
- Abdecken der Kernschicht mit einer Versteifungsschicht,
- Überdecken der Versteifungsschicht mit einer Deckschicht und
- Verbinden der Kernschicht, der Versteifungsschicht und der Deckschicht miteinander.

Ein Trägerkörper, insbesondere für einen portablen Datenträger, mit einem Hohlraum, wird bereitgestellt, wobei der Trägerkörper wenigstens abschnittsweise mit einem entsprechenden Verfahren hergestellt ist.

Ein portabler Datenträger wird bereitgestellt, der einen entsprechenden Trägerkörper aufweist.

Eine Herstellungsvorrichtung zum Herstellen portabler Datenträger wird bereitgestellt, die ausgestaltet und/oder eingerichtet ist, um ein entsprechendes Verfahren auszuführen.

Insbesondere Kernschicht und/oder Deckschicht können aus einer Vielzahl von Schichten und/oder aus Folien gebildet sein. Durch die Versteifungsschicht kann verhindert werden, dass etwaiges Material, wie Kleber oder verdrängte Anteile der Kernschicht und/oder der Deckschicht in die Aussparung eindringen, aus welcher der Hohlraum gebildet wird. Gegenüber dem Stand der Technik hat die erfindungsgemäße Lösung also den Vorteil, dass die Formstabilität des Trägerkörpers und somit auch des Hohlraumes erhöht ist.

Gemäß einer Ausführungsform kann vorgesehen sein, dass die Kernschicht von unten mit einer weiterer Versteifungsschicht abgedeckt und/oder unterhalb der weiteren Versteifungsschicht bzw. der Kernschicht eine weitere Deckschicht angeordnet wird. Somit kann also der Hohlraum durch ein Abdecken der Aussparung von oben sowie von unten ausgebildet und verschlossen sein. Der Trägerkörper kann symmetrisch aufgebaut sein, indem die Kernschicht oben und unten zunächst mit einer Versteifungsschicht überdeckt und diese dann mit einer Deckschicht abgedeckt ist. Auf diesem Wege lässt sich ein stabiler Trägerkörper bereitstellen.

Gemäß einer Ausführungsform kann vorgesehen sein, dass die Versteifungsschicht verspannt wird. Die Versteifungsschicht kann bzw. beide Versteifungsschichten können in einem Spannrahmen verspannt werden. Somit kann die Versteifungsschicht die Kernschicht sowie darin ausgeformte Aussparung möglichst formtreu überdecken. Das Verspannen hilft zudem zu verhindern, dass die Versteifungsschicht und/oder die Deckschicht in die Aussparung hinein verformt werden bzw. wird.

Gemäß einer Ausführungsform kann die Versteifungsschicht einen höheren Schmelzpunkt aufweisen als die Deckschicht und/oder die Kernschicht. Die Versteifungsschicht kann Metall und/oder Kunststoff umfassen. Beispielsweise kann die Versteifungsschicht zumindest abschnittsweise als Gewebe, Vlies und/oder Gewirk ausgestaltet sein. Der höhere Schmelzpunkt hilft insbesondere bei thermischen Fügeverfahren zu verhindern, dass Material der Deckschicht und/oder der Kernschicht in die Aussparung hineingedrückt wird.

Gemäß einer Ausführungsform kann vorgesehen sein, dass der Schritt des Verbindens ein Laminieren der Kernschicht, der Versteifungsschicht und/oder der Deckschicht umfasst. Der Laminierungsprozess kann ein Verpressen unter erhöhter Temperatur und erhöhtem Druck umfassen. Somit lassen sich Kernschicht, Versteifungsschicht und/oder Deckschicht stabil und womöglich ohne Einsatz weiterer Hilfsmittel, wie Kleber, zusammenfügen. Beispielsweise können dazu die Kernschicht und/oder die Deckschicht zumindest abschnittsweise aus thermoplastischen Material bereitgestellt werden.

Gemäß einer Ausführungsform kann vorgesehen sein, dass vor dem Schritt des Abdeckens ein Objekt in der Aussparung angeordnet wird. Das Objekt kann ein funktionales Element, wie ein elektronisches Bauteil, o.ä. sein, und/oder ein Designelement, wie Leuchtmittel, Samen, Sand, Flüssigkeiten, o.ä., umfassen. Somit lässt sich das Objekt einfach im Hohlraum unterbringen.

Gemäß einer Ausführungsform kann vorgesehen sein, dass eine Vielzahl der Trägerkörper in einem Verbund hergestellt und anschließend vereinzelt werden. Beispielsweise können die Trägerkörper in einem Bogen zusammengefasst hergestellt werden. Die Trägerkörper können durch Stanzen, Schneiden, Sägen oder o.ä. vereinzelt werden. Somit lassen sich eine Vielzahl der Trägerkörper bzw. diese umfassende portable Datenträger gemeinsam in einer Herstellungsphase bereitstellen.

Hierin in Bezug auf Verfahren beschriebenen Merkmale sowie entsprechende Verfahrensschritte können als Vorrichtungsmerkmale implementiert werden oder umgekehrt. Im Zusammenhang mit dem Verfahren stehende Abschnitte der Beschreibung gelten also in analoger Weise auch für eine Herstellungsvorrichtung sowie Computerprogramme zu deren Steuerung. Insbesondere können Verfahrensschritte und damit zusammenhängend erwähnte Komponenten als Funktionen der Herstellungsvorrichtung sowie entsprechenden Computerprogramme implementiert sein und beliebige Funktionen der Herstellungsvorrichtung können als Verfahrensschritte implementiert werden.

### Kurze Beschreibung der Figuren

- Fig. 1: zeigt eine schematische Draufsicht eines portablen Datenträgers, der einen Trägerkörper mit einem darin ausgeformten Hohlraum umfasst.
- Fig. 2: zeigt eine schematische Querschnittsansicht des Trägerkörpers entlang einer in Fig. 1 eingezeichneten Schnittline A-A.
- Fig. 3: zeigt eine schematische Draufsicht einer Herstellungsvorrichtung und einer Vielzahl von Trägerkörpern für portable Datenträger vor dem Vereinzeln.
- Fig. 4: zeigt ein Schema eines Verfahrens zur Herstellung des Trägerkörpers.

### Detaillierte Beschreibung beispielhafter Ausführungsformen

Die Darstellungen in den Figuren sind schematisch und nicht maßstäblich. Werden in der folgenden Figurenbeschreibung in verschiedenen Figuren die gleichen Bezugszeichen verwendet, so bezeichnen diese gleiche oder ähnliche Elemente. Gleiche oder ähnliche Elemente können aber auch durch unterschiedliche Bezugszeichen bezeichnet sein.

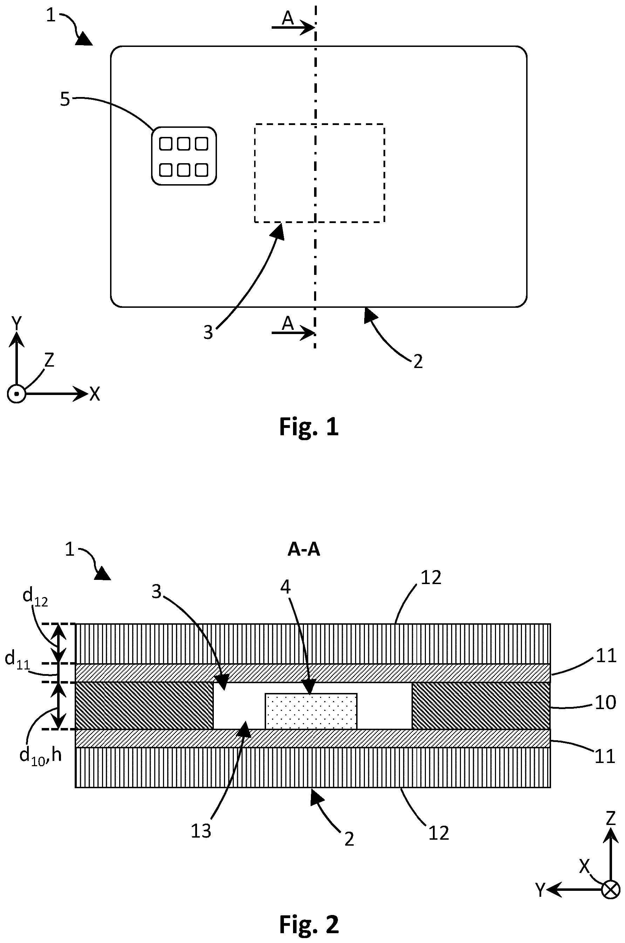

Fig. 1 zeigt eine schematische Draufsicht eines portablen Datenträgers, der einen Trägerkörper 2 mit einem darin ausgeformten Hohlraum 3 umfasst, in dem ein Objekt 4 aufgenommen sein kann (siehe Fig. 2). Zusätzlich kann der portable Datenträger 1 ein Datenträgermodul 3 umfassen. Der portable Datenträger 1 erstreckt sich in einer Längsrichtung X, einer Querrichtung Y und einer Höhenrichtung Z, die gemeinsam ein kartesisches Koordinatensystem aufspannen.

Fig. 2 zeigt eine schematische Querschnittsansicht des Trägerkörpers 2 des portablen Datenträgers 1 entlang einer in Fig. 1 eingezeichneten Schnittline A-A. Der Trägerkörper 2 umfasst eine Kernschicht 10, die oben und unten jeweils von einer Versteifungsschicht 11 überdeckt ist, wobei diese wiederum von einer Deckschicht 12 abgedeckt ist. In der Kernschicht 10 ist eine Aussparung 13 ausgeformt, die den Hohlraum 3 bildet, indem sie oben und unten von der Versteifungsschicht 11 verschlossen ist. Innerhalb des Hohlraumes 3 ist das Objekt 4 angeordnet, bei denen es sich beispielsweise um ein mit dem Datenträgermodul 5 zusammenwirkendes funktionales Element, wie ein elektronisches Bauteil, o.ä., und/oder um ein Designelement, wie Leuchtmittel, Samen, Sand, Flüssigkeiten, o.ä., handeln kann.

Ferner ist in Fig. 2 verdeutlicht, dass eine jeweils im Wesentlichen parallel zur Höhenrichtung Z gemessene Kernschichtdicke d₁₀ der Kernschicht 10 größer sein kann als eine Deckschichtdicke d₁₂ der Deckschicht 12, die wiederum größer sein kann als eine Versteifungsschichtdicke d₁₁ der Versteifungsschicht 11. Beispielsweise kann die Kernschichtdicke d₁₀ anhand einer gewünschte und/oder erforderliche ebenfalls im Wesentlichen parallel zur Höhenrichtung Z gemessene Hohlraumhöhe h des Hohlraums 3 gewählt sein, da sie im Wesentlichen die Hohlraumhöhe h bestimmt. Die Versteifungsschichtdicke d₁₁ wiederum kann so gewählt sein, dass die Versteifungsschicht 11 eine jeweils gewünschte und/oder erforderliche Stabilität aufweist. Die Deckschichtdicke kann d₁₂ derart gewählt sein, dass eine gewünschte und/oder erforderliche Stabilität erfüllt ist, wobei auch berücksichtigt werden kann, dass eine Gesamthöhe des Trägerkörpers kleiner als eine gewünschte Maximalhöhe bleibt.

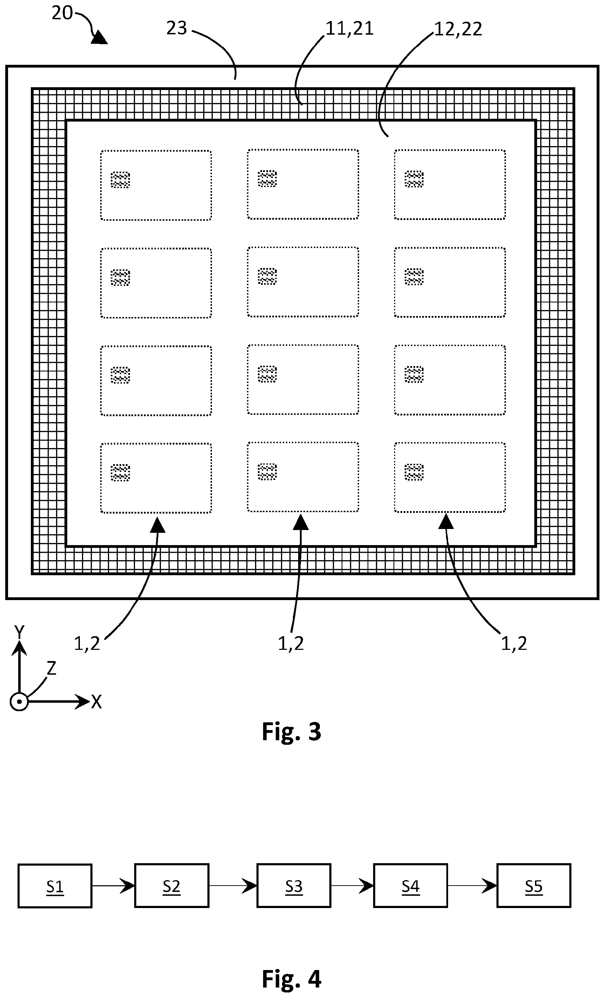

Fig. 3 zeigt eine schematische Draufsicht einer Herstellungsvorrichtung 20 und einer Vielzahl von Trägerkörpern 2 für portable Datenträger 1 vor dem Vereinzeln. Die Versteifungsschicht 11 kann für eine Vielzahl von Trägerkörpern 2 als ein Versteifungsschichtbogen 21 bereitgestellt sein. Die Deckschicht 12 kann entsprechend als ein Deckschichtbogen 22 für eine Vielzahl von Trägerkörpern 2 bereitgestellt sein und den und den Versteifungslichtbogen 21 abdecken. Der Versteifungssichtbogen 21 kann in einem Spannrahmen 23 der Herstellungsvorrichtung 20 verspannt sein, zumindest solange die Kernschicht 10, die Versteifungsschicht 11 und/oder die Deckschicht 12 miteinander verbunden sind, beispielsweise durch Laminieren, Kleben o.ä. Danach kann die Vielzahl von Trägerkörpern 2 bzw. diese umfassenden portablen Datenträger beispielsweise gemeinsam als Bogen aus der Herstellungsvorrichtung 20 zum Vereinzeln entfernt oder innerhalb dieser vereinzelt werden, beispielsweise durch Stanzen, Laserschneiden o.ä.

Fig. 4 zeigt ein Schema eines Verfahrens mit Schritten S zur Herstellung des Trägerkörpers 2. So kann in einem ersten Schritt S1 die Kernschicht 10 mit der Aussparung 13 bereitgestellt werden. In einem zweiten Schritt S2 kann das Objekt 4 in der Aussparung platziert 13 werden. In einem dritten Schritt S3 kann die Kernschicht 10 mit der Versteifungsschicht 11 und damit die Aussparung 13 abgedeckt werden. In einem vierten Schritt S4 kann die Versteifungsschicht 11 mit der Deckschicht12 überdeckt werden. In einem fünften Schritt S5 können die Kernschicht 10, die Versteifungssicht 11 und/oder die Deckschicht 12 miteinander verbunden werden, um beispielsweise so den Hohlraum 3 samt darin aufgenommenen Objekt 4 zu versiegeln.

### Bezugszeichenliste

- 1: portabler Datenträger
- 2: Trägerkörper
- 3: Hohlraum
- 4: Objekt
- 5: Datenträgermodul
- 10: Kernschicht
- 11: Versteifungsschicht
- 12: Deckschicht
- 13: Aussparung

- 20: Herstellungsvorrichtung
- 21: Versteifungsbogen
- 22: Deckschichtbogen
- 23: Spannrahmen

- d₁₀: Kernschichtdicke
- d₁₁: Versteifungsschichtdicke
- d₁₂: Deckschichtdicke
- h: Hohlraumhöhe

- S: Schritt
- S1: Bereitstellen der Kernschicht
- S2: Platzieren des Objektes
- S3: Abdecken der Kernschicht
- S4: Überdenken der Versteifungsschicht
- S5: Verbinden
- X: Längsrichtung
- Y: Querrichtung
- Z: Höhenrichtung

## Patentansprüche

1. Verfahren zum Herstellen eines Trägerkörpers (2), insbesondere für einen portablen Datenträger (1), mit einem Hohlraum (3), umfassend folgende Schritte:
- Bereitstellen einer Kernschicht (10) mit wenigstens einer Aussparung (13), die eine Kontur des Hohlraumes (13) vorgibt,
- Abdecken der Kernschicht (10) mit einer Versteifungsschicht (11),
- Überdecken der Versteifungsschicht (11) mit einer Deckschicht (12) und
- Verbinden der Kernschicht (10), der Versteifungsschicht (11) und der Deckschicht (13) miteinander.

2. Verfahren nach Anspruch 1, **dadurch gekennzeichnet, dass** die Kernschicht (10) von unten mit einer weiterer Versteifungsschicht (11) abgedeckt und/oder unterhalb der weiteren Versteifungsschicht (11) bzw. der Kernschicht (10) eine weitere Deckschicht (12) angeordnet wird.

3. Verfahren nach Anspruch 1 oder 2, **dadurch gekennzeichnet, dass** die Versteifungsschicht (11) verspannt wird.

4. Verfahren nach wenigstens einem der oben genannten Ansprüche, **dadurch gekennzeichnet, dass** die Versteifungsschicht (11) einen höheren Schmelzpunkt aufweist als die Deckschicht (12) und/oder die Kernschicht (10).

5. Verfahren nach wenigstens einem der oben genannten Ansprüche, **dadurch gekennzeichnet, dass** der Schritt des Verbindens ein Laminieren der Kernschicht (10), der Versteifungsschicht (11) und/oder der Deckschicht (12) umfasst.

6. Verfahren nach wenigstens einem der oben genannten Ansprüche, **dadurch gekennzeichnet, dass** vor dem Schritt des Abdeckens ein Objekt (4) in der Aussparung (13) angeordnet wird.

7. Verfahren nach wenigstens einem der oben genannten Ansprüche, **dadurch gekennzeichnet, dass** eine Vielzahl der Trägerkörper (3) in einem Verbund hergestellt und anschließend vereinzelt werden.

8. Trägerkörper (2), insbesondere für einen portablen Datenträger (1), mit einem Hohlraum (3), **dadurch gekennzeichnet, dass** der Trägerkörper (2) wenigstens abschnittsweise mit einem Verfahren nach wenigstens einem der Ansprüche 1 bis 7 hergestellt ist.

9. Portabler Datenträger (1), **gekennzeichnet durch** einen Trägerkörper (2) nach Anspruch 8.

10. Herstellungsvorrichtung (20) zum Herstellen portabler Datenträger (1), **dadurch gekennzeichnet, dass** die Herstellungsvorrichtung (20) ausgestaltet und/oder eingerichtet ist, um ein Verfahren nach wenigstens einem der Ansprüche 1 bis 7 auszuführen.
